(19) Europäisches Patentamt / European Patent Office / Office européen des brevets

(11) **EP 3 662 558 B1**

(12) **FASCICULE DE BREVET EUROPEEN**

(45) Date de publication et mention de la délivrance du brevet:
**14.04.2021 Bulletin 2021/15**

(21) Numéro de dépôt: **18735358.6**

(22) Date de dépôt: **16.05.2018**

(51) Int Cl.:
*H02J 3/14* $^{(2006.01)}$        *H02J 13/00* $^{(2006.01)}$
*G06Q 10/06* $^{(2012.01)}$       *G06Q 50/06* $^{(2012.01)}$

(86) Numéro de dépôt international:
**PCT/FR2018/051179**

(87) Numéro de publication internationale:
**WO 2019/025673 (07.02.2019 Gazette 2019/06)**

(54) **LISSAGE D'UNE COURBE DE CHARGE COMPRENANT UNE AGRÉGATION DE COURBES DE CHARGES ÉLÉMENTAIRES**

GLÄTTUNG EINER LASTKURVE MIT AGGREGATION VON ELEMENTAREN LASTKURVEN

SMOOTHING OF A LOAD CURVE COMPRISING AN AGGREGATION OF ELEMENTARY LOAD CURVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2017 FR 1757323**

(43) Date de publication de la demande:
**10.06.2020 Bulletin 2020/24**

(73) Titulaire: **Voltalis SA**
**75008 Paris (FR)**

(72) Inventeurs:
• **BINEAU, Mathieu**
  **Versailles 78000 (FR)**
• **AUTORD, Marc**
  **78930 Guerville (FR)**
• **PINARD, Benjamin**
  **75014 Paris (FR)**
• **TAN, Christophe**
  **92340 Bourg la Reine (FR)**
• **OURY, Jean Marc**
  **75007 Paris (FR)**
• **HEINTZ, Bruno**
  **75015 Paris (FR)**

(74) Mandataire: **Ipsilon**
**Le Centralis**
**63, avenue du Général Leclerc**
**92340 Bourg-la-Reine (FR)**

(56) Documents cités:
CN-A- 103 793 788      FR-A1- 2 904 486
FR-A1- 2 978 309       FR-A1- 2 987 948

EP 3 662 558 B1

**Description**

La présente invention concerne de manière générale un procédé et un système de gestion et/ou de surveillance de consommation énergétique d'un ensemble de charges, apte à déterminer une courbe de charge globale comprenant une agrégation d'une pluralité de courbes de charge élémentaires, chaque courbe de charge élémentaire correspondant à une variation temporelle de la consommation d'une charge appartenant à l'ensemble et dont le fonctionnement est de type à régulation périodique.

Un domaine d'application visé tout particulièrement, bien que non exclusivement, par l'invention est celui de la gestion et/ou de la surveillance de consommation en électricité d'un nombre particulièrement élevé d'équipements électriques, par exemple des équipements électriques à usage domestique situés chez un grand nombre de consommateurs et reliés à un réseau de distribution d'électricité.

Dans de tels systèmes, il est classique d'installer au moins un dispositif électronique sur une pluralité de sites (domiciles, bâtiments d'entreprises, collectivités...), relié localement à au moins un équipement électrique sous surveillance de façon à pouvoir effectuer, de préférence en continu, des mesures de consommation électrique de cet équipement électrique. Une plateforme centralisée dédiée, sous forme d'un ou de plusieurs serveurs, obtient alors en temps réel des échantillons de mesures de consommation électrique communiqués par chaque dispositif électronique local du système. La plateforme peut ainsi déterminer les courbes de charge élémentaires, c'est-à-dire la variation temporelle de la consommation relative à chacune des charges ou équipements électriques sous surveillance, et en déduire, par agrégation de ces courbes de charge élémentaires, une courbe de charge globale.

La Demanderesse propose par exemple un tel système de gestion de la consommation d'un ensemble composé d'un nombre très élevé d'équipements électriques situé chez un grand nombre d'utilisateurs, dans lequel les différentes courbes de charge obtenues permettent notamment de proposer un service dit d'effacement diffus, par lequel il est possible de sélectionner en temps réel, dans l'ensemble des équipements électriques, un sous-ensemble d'appareils électriques auxquels le système, en particulier la plateforme centrale, va envoyer des ordres de coupure momentanée de fonctionnement, de manière à réduire la consommation d'énergie de l'ensemble d'une valeur de consigne donnée. Un système de ce type est par exemple dans la demande WO2008/017754, ou dans la demande WO2012/172242. Ce système, en étant également apte à moduler, via des ordres de coupure et de redémarrage, sélectivement l'alimentation de certains équipements électriques par analyse de la consommation d'un grand nombre d'utilisateurs, permet d'adapter la consommation électrique à la production d'électricité disponible à un instant donné.

Dans le système précédemment décrit, la plateforme centralisée obtient des échantillons de mesures de consommation électrique à une période d'échantillonnage généralement de l'ordre de la dizaine de minutes.

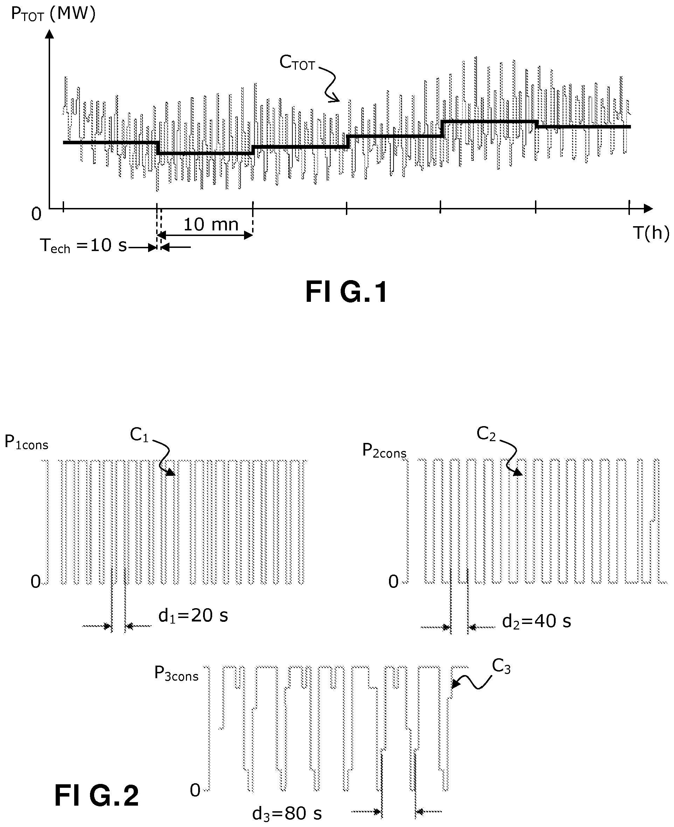

Pour autant, il est également souhaitable de pouvoir déterminer une courbe de charge globale plus précise en réduisant la période d'échantillonnage. Or, en utilisant une période d'échantillonnage fortement réduite, typiquement de l'ordre de la dizaine de secondes, la Demanderesse s'est trouvée confrontée à des situations dans lesquelles la courbe de charge totale obtenue après agrégation des courbes de charges élémentaires était fortement parasitée. La figure 1 illustre un exemple d'une courbe de charge $C_{TOT}$ obtenue sur une durée d'environ une heure en prélevant des échantillons de mesures de consommation électrique à une période d'échantillonnage $T_{ech}$ égale à 10 secondes, cette courbe de charge faisant apparaître de fortes oscillations qui n'étaient pas visibles en utilisant une période d'échantillonnage de l'ordre de la dizaine de minutes, comme le montre le tracé en trait gras en surimpression de la courbe de charge $C_{TOT}$.

La présence de ces oscillations rend beaucoup plus difficile l'estimation précise de la courbe de charge globale. De plus, ces oscillations peuvent être, à défaut de surdimensionnement, à l'origine de détérioration des lignes électriques ou de congestion.

La présente invention a pour but de proposer une solution à ce problème.

Pour ce faire, l'invention a pour objet un procédé de lissage d'une courbe de charge globale comprenant une agrégation d'une pluralité de courbes de charge élémentaires obtenues par un système de gestion et/ou de surveillance de consommation de charges, chaque courbe de charge élémentaire correspondant à une variation temporelle de la consommation d'une charge i à régulation périodique, ledit procédé comportant les étapes suivantes :

- on détermine une période de régulation $d_i$ associée à la charge *i* correspondante ;
- on détermine et on mémorise chaque courbe de charge élémentaire par obtention d'une pluralité d'échantillons de mesures de consommation à une période d'échantillonnage $T_{ech}$ sous-multiple de chaque période de régulation $d_i$ ;
- à partir d'un instant de référence $t_0$ commun à toutes les charges, on décale temporellement, soit le fonctionnement de chaque charge *i*, soit au moins une partie de chaque courbe de charge élémentaire mémorisée, d'un décalage aléatoire $\Delta t_i$ fonction de la période d'échantillonnage $T_{ech}$, de la période de régulation $d_i$ déterminée pour la charge *i* et d'une valeur entière aléatoire $N_i$ associée à la charge *i*.

Outre les caractéristiques principales qui viennent d'être mentionnées dans le paragraphe précédent, le procédé selon l'invention peut présenter une ou plusieurs caractéristiques complémentaires parmi les suivantes :

- l'étape de décalage temporel du fonctionnement de chaque charge *i* peut comporter, à partir dudit instant de référence $t_0$ commun à toutes les charges, l'application successive, pour chaque charge i, d'un ordre de coupure de fonctionnement de la charge *i* puis d'un ordre de redémarrage de fonctionnement de la charge *i* ;
- ledit ordre de redémarrage de fonctionnement de la charge *i* est de préférence appliqué à un instant aléatoire de redémarrage donné par la relation

$$t_{rep}^i = t_{rep_i}^0 + \left( t_{rep_i}^0 - t_0 \right) N_i$$

dans laquelle $t_{rep_i}^0$ est un instant satisfaisant les deux relations suivantes :

$$\left( t_{rep_i}^0 - t_0 \right) < d_i \quad \text{et} \quad PGCD\left( \frac{\left( t_{rep_i}^0 - t_0 \right)}{T_{ech}} ; \frac{d_i}{T_{ech}} \right) = 1$$

PGCD étant la fonction plus grand diviseur commun, et ledit ordre de coupure de fonctionnement de la charge *i* est appliqué à un instant de coupure supérieur ou égal à l'instant de référence $t_0$ commun à toutes les charges et inférieur à l'instant aléatoire $t_{rep}^i$ de redémarrage ;

- ledit ordre de coupure de fonctionnement de la charge *i* peut être appliqué pour toutes les charges à l'instant de référence $t_0$ ; en variante, ledit ordre de coupure de fonctionnement de la charge *i* est appliqué à un instant choisi arbitrairement dans l'intervalle compris entre l'instant de référence $t_0$ commun à toutes les charges et l'instant aléatoire $t_{rep}^i$ de redémarrage ;
- l'ordre de coupure de fonctionnement de la charge i peut être appliqué à un instant choisi de manière à ce que le décalage aléatoire $\Delta t_i$ soit identique pour toute charge de même période de régulation $d_i$, par exemple fixé égal à la période d'échantillonnage $T_{ech}$ ;
- dans un autre mode de réalisation possible, l'étape de décalage temporel d'une partie de chaque courbe de charge élémentaire mémorisée peut comprendre la sélection de ladite partie de chaque courbe comprenant des échantillons de mesure obtenus à partir d'un premier instant identique pour toutes les charges, et le décalage de ladite partie sélectionnée pour faire coïncider son début avec un deuxième instant postérieur au premier instant ;
- en variante, l'étape de décalage temporel d'une partie de chaque courbe de charge élémentaire mémorisée comprend la détermination d'un premier instant simulant une coupure et d'un deuxième instant postérieur au premier instant et simulant un redémarrage, la sélection de ladite partie de chaque courbe comprenant des échantillons de mesure obtenus en aval d'un troisième instant correspondant à l'instant de référence augmenté d'une valeur correspondant à la période de régulation de la charge, le décalage de ladite partie sélectionnée pour faire coïncider son début avec ledit deuxième instant, et la suppression d'une portion de courbe située entre ledit premier instant et ledit deuxième instant ;
- ledit deuxième instant est de préférence un instant aléatoire donné par la relation

$$t_{rep}^i = t_{rep_i}^0 + \left( t_{rep_i}^0 - t_0 \right) N_i$$

dans laquelle $t_{rep_i}^0$ est un instant satisfaisant les deux relations suivantes :

$$\left( t^{0}_{rep} - t_{0} \right) < d_{i}$$

$$PGCD\left( \frac{\left( t^{0}_{rep_i} - t_{0} \right)}{T_{ech}} ; \frac{d_{i}}{T_{ech}} \right) = 1,$$

et 
PGCD étant la fonction plus grand diviseur commun, et ledit premier instant est choisi supérieur ou égal à l'instant de référence $t_{0}$ commun à toutes les charges et inférieur au deuxième instant :

- la période de régulation $d_{i}$ associée à la charge *i* peut être déterminée en estimant ladite période de régulation $d_{i}$ à partir de la courbe de charge associée, ou en fixant ladite période de régulation à une valeur prédéterminée ;
- la valeur entière aléatoire $N_{i}$ est de préférence n'importe quel entier supérieur ou égal à 0 et inférieur ou égal à

$$\frac{d_{i}}{T_{ech}} - 1.$$

L'invention a également pour objet un système de gestion et/ou de surveillance de consommation de charges apte à déterminer une courbe de charge globale comprenant une agrégation d'une pluralité de courbes de charge élémentaires, chaque courbe de charge élémentaire correspondant à une variation temporelle de la consommation d'une charge *i* à régulation périodique, ledit système comportant des moyens aptes à effectuer un lissage de ladite courbe de charge par application des étapes suivantes :

- on détermine une période de régulation $d_{i}$ associée à la charge *i* correspondante ;
- on détermine et on mémorise chaque courbe de charge élémentaire par obtention d'une pluralité d'échantillons de mesures de consommation à une période d'échantillonnage $T_{ech}$ sous-multiple de chaque période de régulation $d_{i}$ ;
- à partir d'un instant de référence $t_{0}$ commun à toutes les charges, on décale temporellement, soit le fonctionnement de chaque charge *i,* soit au moins une partie de chaque courbe de charge élémentaire mémorisée, d'un décalage aléatoire $\Delta t_{i}$ fonction de la période d'échantillonnage $T_{ech}$, de la période de régulation $d_{i}$ déterminée pour la charge *i* et d'une valeur entière aléatoire $N_{i}$ associée à la charge *i*.

Le système est par exemple un système apte à la gestion et/ou de surveillance de consommation en énergie électrique de charges comprenant des équipements électriques domestiques situés chez une pluralité de consommateurs et raccordés à un réseau de distribution d'électricité.

Il peut comporter d'une part, chez chaque consommateur, au moins un premier dispositif électronique apte à mesurer la consommation électrique d'au moins un équipement électrique auquel il est relié et à appliquer des ordres de coupure de fonctionnement et des ordres de redémarrage de fonctionnement audit au moins un équipement électrique, et au moins un deuxième dispositif électronique de communication relié au premier dispositif électronique et d'autre part, au moins serveur central apte à communiquer avec ledit premier dispositif par l'intermédiaire du deuxième dispositif électronique de communication pour obtenir en temps réel ladite pluralité d'échantillons de mesures de consommation à la période d'échantillonnage $T_{ech}$.

Le premier et le deuxième dispositifs électroniques peuvent être intégrés dans un unique boîtier.

L'invention sera mieux comprise à la lecture de la description qui suit, faite en référence aux figures annexées, dans lesquelles :

- la figure 1, déjà décrite ci-avant, donne un exemple d'une courbe de charge obtenue avec un système d'agrégation de courbes de charge élémentaires de l'art antérieur, fonctionnant avec une période d'échantillonnage réduite à 10 secondes ;
- la figure 2 illustre trois exemples de courbes de charge pour trois radiateurs électriques ;
- la figure 3 donne une décomposition d'une portion de courbe de charge obtenue par agrégation en trois signaux ;
- la figure 4 donne schématiquement des étapes d'un procédé de lissage selon un mode de réalisation possible de l'invention ;
- la figure 5 donne une comparaison d'une courbe de charge agrégée obtenue avant et après application d'un lissage selon l'invention ;

- la figure 6 illustre le principe d'un procédé de lissage selon un autre mode de réalisation possible de l'invention, par traitement numérique ;
- la figure 7 illustre une variante d'un procédé de lissage par traitement numérique selon l'invention ;
- la figure 8 représente schématiquement un exemple d'architecture d'un système de gestion et/ou de surveillance de consommation de charges apte à déterminer une courbe de charge globale comprenant une agrégation d'une pluralité de courbes de charge élémentaires, conformément à l'invention.

Dans la suite de l'exposé, l'invention sera décrite dans le cadre de la détermination d'une courbe de charge globale comprenant une agrégation de courbes de charge élémentaires correspondant à l'évolution temporelle de la consommation électrique d'une pluralité d'équipements électriques. On verra néanmoins que le principe de l'invention peut être généralisé à d'autres types d'énergies consommées, à partir du moment où les charges considérées fonctionnent en tout ou rien et que la consommation suit un schéma périodique, par exemple lorsque les charges considérées sont soumises à une régulation de type périodique.

Comme indiqué précédemment en référence à la figure 1, le phénomène de fortes oscillations pour une courbe de charge globale comprenant l'agrégation d'une pluralité de courbes de charge élémentaires a été constaté par la Demanderesse lorsque la période d'échantillonnage pour l'obtention d'échantillons de mesures de consommation électrique des charges constituées par des équipements électriques situés chez un grand nombre de consommateurs, notée $T_{ech}$ dans la suite de l'exposé, a été réduite à une valeur de l'ordre de la dizaine de secondes. Des tests et simulations ont montré par ailleurs que ce phénomène est amplifié lorsqu'au moins une partie des équipements électriques sous surveillance est soumise à des démarrages simultanés ou quasi-simultanés, comme cela peut être le cas par exemple lors d'une coupure générale au niveau du réseau de distribution d'électricité.

Une analyse approfondie de ce phénomène a permis d'en déterminer plus précisément la cause en identifiant le fait qu'à l'heure actuelle, un grand nombre d'équipements électriques à usage domestique, tels que des radiateurs, des climatiseurs, des réfrigérateurs, des congélateurs, ou des éclairages par halogène, peuvent avoir des régimes de fonctionnement en tout ou rien avec des régulations périodiques. La figure 2 illustre à titre d'exemple trois courbes de charge $C_1$, $C_2$, $C_3$ obtenues pour trois radiateurs du commerce. Ces courbes $C_1$, $C_2$, $C_3$, représentatives de la variation temporelle de puissance consommée, respectivement $P_{1cons}$, $P_{2cons}$ et $P_{3cons}$, par chacun des radiateurs, montrent clairement le fonctionnement en tout ou rien de chacun des radiateurs, avec des périodes de régulation, respectivement $d_1$, $d_2$ et $d_3$, et des durées de cycle qui diffèrent d'un radiateur à l'autre. Ce comportement de régulation périodique est en fait responsable des fortes oscillations constatées sur une courbe de charge agrégée, car des équipements électriques en grand nombre, vont parfois fonctionner de façon synchronisée, notamment dans les situations dans lesquelles ces équipements sont démarrés simultanément suite à une coupure de courant ou suite à une consigne horaire (signaux tarifaires, horloges, etc.).

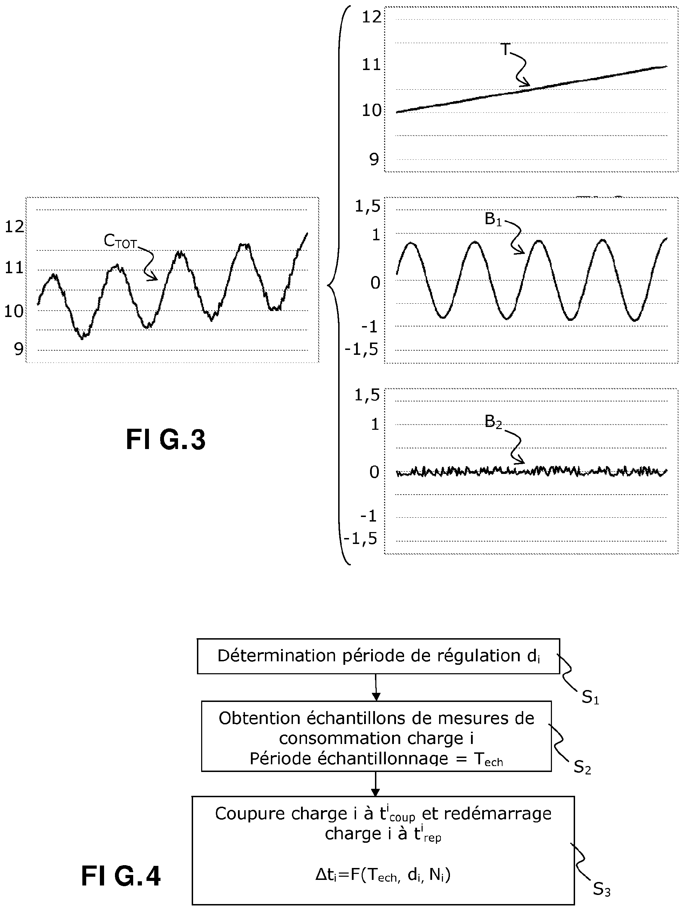

Ainsi, on peut montrer qu'en partant d'un ensemble de charges électriques à régulation périodique et allumées au même instant, la courbe de charge agrégée, telle que la portion de courbe bruitée $C_{TOT}$ montrée sur la figure 3, est décomposable en trois signaux :

- une tendance apériodique T ;

- un premier bruit structuré $B_1$ qui a pour origine la régulation périodique des charges électriques ; et

- un deuxième bruit $B_2$ non structuré et de faible amplitude, ce dernier pouvant être facilement éliminé par filtrage classique.

Pour lisser au maximum la courbe de charge globale, c'est-à-dire pour atténuer au maximum le premier bruit structuré $B_1$, conséquence d'une synchronisation d'un grand nombre de charges électriques $i$ de même régulation périodique de période de régulation notée $d_i$ dans la suite, la présente invention propose de forcer, à partir d'un instant de référence $t_0$ commun à toutes les charges, une désynchronisation des charges par application, pour une charge $i$, d'un décalage temporel aléatoire $\Delta t_i$ fonction de la période d'échantillonnage $T_{ech}$, de la période de régulation $d_i$ déterminée pour la charge $i$ et d'une valeur entière aléatoire $N_i$ associée à la charge $i$.

Le décalage temporel aléatoire propre à chaque charge peut être appliqué de deux façons, qui seront présentées de façon détaillée dans la suite :

- soit en agissant directement sur le fonctionnement des charges électriques ;
- soit en effectuant un traitement numérique de portions de courbes de charges déjà obtenues et mémorisées.

Décalage temporel du fonctionnement des charges i :

Le principe général de l'application d'un décalage temporel aléatoire sur le fonctionnement de chaque charge $i$ à partir d'un instant de référence $t_0$ commun à toutes les charges, est réalisé par l'application successive, pour chaque charge $i$, d'un ordre de coupure de fonctionnement de la charge $i$ puis d'un ordre de redémarrage de fonctionnement de la charge $i$.

On convient dans la suite des notations et particularités suivantes :

$i$ représente une charge dont on surveille la consommation et, lorsqu'il est affecté sous forme d'indice à un paramètre donné, le paramètre lié à la charge ;

$d_i$ est la période de régulation associée à la charge $i$ ;

$T_{ech}$ est la période d'échantillonnage pour l'obtention des échantillons de mesures de consommation des charges, $T_{ech}$ étant un sous-multiple de chaque période de régulation $d_i$, par exemple 10 secondes;

$t_0$ est l'instant de référence commun à toutes les charges ;

$t^i_{coup}$ est l'instant de coupure d'une charge $i$, c'est-à-dire l'instant auquel on applique un ordre de coupure à une charge $i$ ;

$t^i_{rep}$ est l'instant de redémarrage d'une charge $i$, c'est-à-dire l'instant auquel on applique un ordre de redémarrage à une charge $i$ ;

$\Delta t_i = t^i_{rep} - t^i_{coup}$ est la durée de la coupure de fonctionnement d'une charge $i$ ;

$t^0_{rep_i}$ est le premier des instants de redémarrage possibles ;

$N_i$ est une valeur entière aléatoire qui peut être égale à 0.

L'instant $t^i_{rep}$ de redémarrage d'une charge i est un instant aléatoire donné par la relation

$$t^i_{rep} = t^0_{rep_i} + \left( t^0_{rep_i} - t_0 \right) N_i \qquad \text{(équation 1)}$$

dans laquelle $t^0_{rep_i}$ (premier des instants de redémarrage possibles) satisfait aux deux relations suivantes :

$$\left( t^0_{rep_i} - t_0 \right) < d_i \ \text{ et } \ \text{PGCD}\left( \frac{\left( t^0_{rep_i} - t_0 \right)}{T_{ech}} ; \frac{d_i}{T_{ech}} \right) = 1 \ \text{(équation 2)}$$

PGCD étant la fonction plus grand diviseur commun.

L'instant de coupure $t^i_{coup}$ est quant à lui choisi arbitrairement dans l'intervalle $[t_0 ; t^i_{rep}[$, et peut ainsi être différent d'une charge à l'autre.

On choisit néanmoins de préférence :

- un instant de coupure $t^i_{coup}$ coïncidant avec l'instant de référence $t_0$ si l'on souhaite privilégier la simplicité d'exécution ;

- un instant de coupure $t^i_{coup}$ précédant l'instant de reprise tel que $\Delta t_i$ est identique pour toutes les charges si on souhaite uniformiser les temps de coupure. Cette durée peut être égale à $T_{ech}$ si l'on souhaite privilégier la brièveté d'interruption de fonctionnement des charges tout en conservant la fréquence d'échantillonnage du système.

Le processus est plus rapide si l'on choisit la valeur entière $N_i$ aléatoirement dans l'intervalle limité de valeurs $[0 ; \dfrac{d_i}{T_{ech}} - 1]$.

Dans un exemple purement illustratif, si on choisit, l'instant de référence $t_0$ commun tous les jours à 3h00, une période d'échantillonnage de 10 secondes et un temps de coupure $\Delta t_i$ de 20 secondes, on pourra par exemple choisir pour une charge électrique i de période de régulation égale à 60 secondes un premier instant de coupure 3h00'30". Cette même charge verra son fonctionnement coupé pendant 20 secondes à compter, aléatoirement, de 3h00'30" ($N_i$=0), de 3h01'20" ($N_i$=1), de 3h02'10" ($N_i$ =2), de 3h03'00" ($N_i$=3), de 3h03'50" ($N_i$=4) ou de 3h04'40" ($N_i$=5).

Un exemple de procédé de lissage de la courbe de charge globale comprenant l'agrégation d'une pluralité de courbes de charge élémentaires $C_i$ appliquant les équations précédentes peut être résumé par les étapes montrées schématiquement sur la figure 4. Les étapes sont montrées ici dans un certain ordre, mais les deux premières étapes peuvent être interverties. Lors d'une première étape $S_1$, on détermine une période de régulation $d_i$ associée à une charge i. Cette détermination peut être faite par la connaissance a priori du type de charges en surveillance et de leur période de régulation associée. Lors d'une deuxième étape $S_2$, on détermine la courbe de charge élémentaire de chaque charge *i* par l'obtention d'une pluralité d'échantillons de mesures de consommation à une période d'échantillonnage $T_{ech}$ unique sous-multiple de chaque période de régulation.

En variante (non représentée), les étapes $S_1$ et $S_2$ sont inversées. Ainsi, on peut utiliser les courbes de charges élémentaires pour estimer les périodes de régulation $d_i$ associées, par exemple en mesurant la durée moyenne entre deux fronts montants de la courbe de charge élémentaire. Dans le cas où cette mesure n'est pas possible, par exemple si la courbe de charge est nulle (charge ne consommant pas à un moment donné), on affecte une période de régulation prédéfinie à la charge considérée. La dernière étape $S_3$ correspond à la phase d'application, à chaque charge i, d'une séquence de coupure et de redémarrage, de manière à décaler temporellement le fonctionnement de chaque charge *i* d'un décalage aléatoire $\Delta t_i$ fonction de la période d'échantillonnage $T_{ech}$, de la période de régulation $d_i$ et de la valeur entière aléatoire. Les instants de coupure et de redémarrage sont définis par le groupe d'équations 1 et 2. Les charges susceptibles, avant le traitement de décalage temporel selon l'invention, d'être synchronisées de par leur période de régulation commune, vont se trouver désynchronisées. Toutes les courbes de charge élémentaires obtenues à partir d'échantillons de mesures de consommation prélevés après ce processus vont permettre l'obtention d'une courbe agrégée lissée, de laquelle une estimation très précise peut être réalisée en temps réel. Ce processus agissant sur le fonctionnement des charges est de préférence répété de façon régulière, par exemple tous les jours à la même heure. En variante, ce processus peut être lancé suite à une détection préalable que certaines charges ont un fonctionnement synchronisé, cette détection étant par exemple réalisée par une analyse des courbes de charge élémentaires.

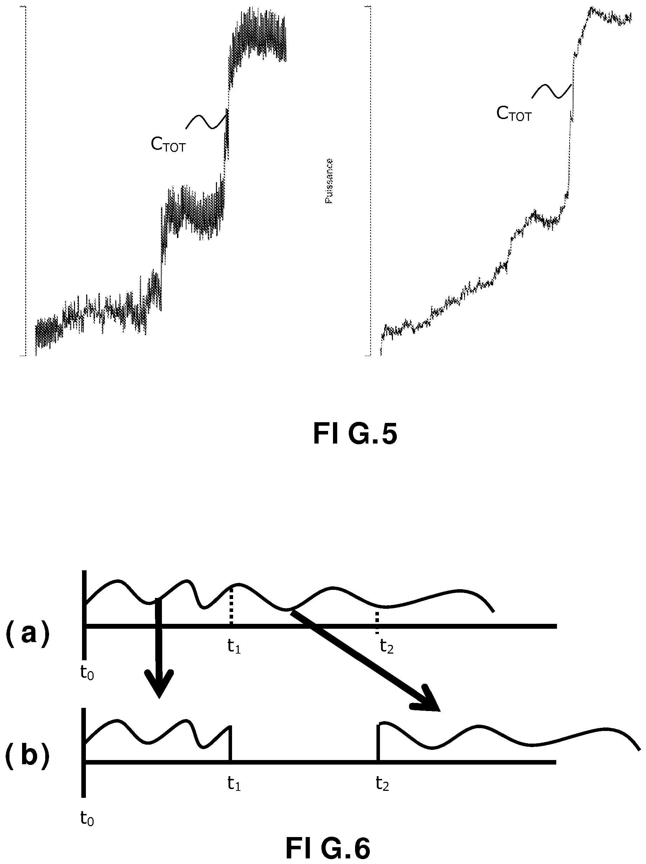

La figure 5 illustre un exemple montrant l'effet de lissage obtenu (partie droite de la figure) sur une courbe de charge globale $C_T$ après application du procédé selon la figure 4. On peut constater que l'effet d'oscillations présent avant traitement (partie gauche de la figure 5) a été fortement réduit grâce à l'invention.

Décalage numérique de portions de courbes de charge :

Le décalage temporel du fonctionnement des charges décrit ci-avant suppose bien entendu que le système est effectivement en mesure d'agir sur le fonctionnement des charges qu'il surveille, grâce à des ordres de coupure et de redémarrage. Si tel n'est pas le cas, on peut procéder, de façon équivalente, à un traitement purement numérique sur les courbes de charges élémentaires déjà obtenues et mémorisées. Pour ce faire, il suffit de simuler pour chaque charge i un ordre de coupure suivi d'un ordre de redémarrage en sélectionnant la portion de chaque courbe de charge élémentaire mémorisée située en aval d'un premier instant $t^i_1$ simulant l'instant de coupure, et en décalant cette portion sélectionnée pour que son début coïncide avec un deuxième instant $t_2^i$ postérieur au premier, simulant l'instant de redémarrage. En d'autres termes, on peut appliquer différents traitements numériques dans lesquels les instants $t_1^i$ et $t_2^i$ viennent remplacer les instants respectivement $t_{coup}^i$ et $t_{rep}^i$ décrits précédemment. On peut donc utiliser les équations 1 et 2 indiquées précédemment en imposant à l'instant de coupure d'être identique pour toutes les charges.

La figure 6 représente schématiquement ce traitement numérique avec, en partie (a) un exemple de courbe de charge élémentaire avant traitement, et en partie (b) la courbe de charge élémentaire résultant du traitement.

Sur cette figure 6, on reprend la notation $t_0$ pour représenter l'instant de référence commun à toutes les charges déjà mentionné ci-avant. La portion de la courbe de charge située en partie (a) entre l'instant de référence $t_0$ et le premier instant $t_1$ simulant la coupure reste inchangée sur la partie (b). En revanche la portion de la courbe de charge située en partie (a) en aval du premier instant $t_1$ simulant la coupure a été décalée sur la droite sur la partie (b) pour que son début coïncide avec le deuxième instant $t_2$ simulant le redémarrage. L'espace de la courbe après traitement situé entre le premier instant $t_1$ et le deuxième instant $t_2$ comprend des échantillons de valeur nulle.

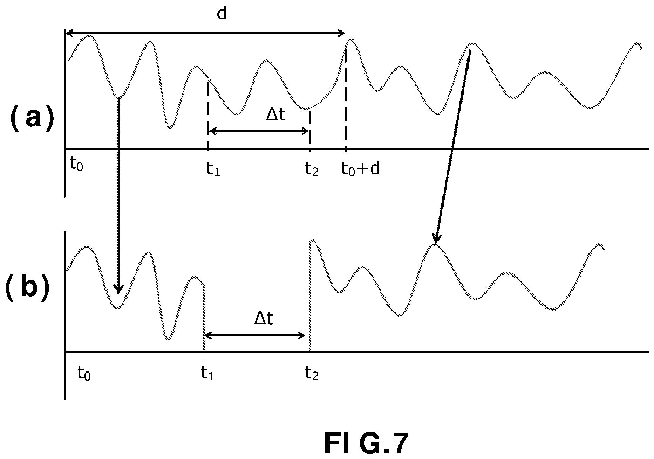

Une variante d'un procédé de lissage par traitement numérique est illustrée sur la figure 7, avec toujours, en partie (a) un exemple de courbe de charge élémentaire avant traitement, et en partie (b) la courbe de charge élémentaire résultant du traitement. Ici encore, la portion de la courbe de charge située, en partie (a), entre l'instant de référence $t_0$ et le premier instant $t_1$ simulant la coupure, reste inchangée sur la partie (b). En revanche la portion de la courbe démarrant, sur la partie (a), à l'instant $t_0 + d$, d étant la période de régulation de la charge, est ramenée sur la partie (b) à l'instant $t_2$ simulant le redémarrage. La portion de la courbe de charge située en partie (a) entre le premier instant $t_1$ simulant la coupure et le deuxième instant $t_2$ a été supprimée en partie (b) et remplacée par des échantillons de valeur nulle. Contrairement à la variante présentée à la figure 6, il n'est pas nécessaire d'imposer ici que le premier instant $t_1$ simulant la coupure soit commun à toutes les charges

La variante de traitement numérique selon la figure 6 est à privilégier si l'on souhaite un traitement en temps réel.

La variante de traitement numérique selon la figure 7 est à privilégier si l'on souhaite un traitement plus proche de ce qui aurait été observé s'il y avait réellement eu une coupure de fonctionnement de la charge.

Une autre possibilité de traitement numérique utilise le fait que toutes les courbes de charge élémentaires étant horodatées, on peut décaler, à partir de l'instant de référence $t_0$ commun, les horodatages de chaque charge de période de régulation $d_i$ d'une valeur égale à $N_i T_{ech}$, avec $N_i$ un nombre entier choisi aléatoirement et uniformément dans l'ensemble

$$\left[ 0, \frac{d_i}{T_{ech}} - 1 \right].$$

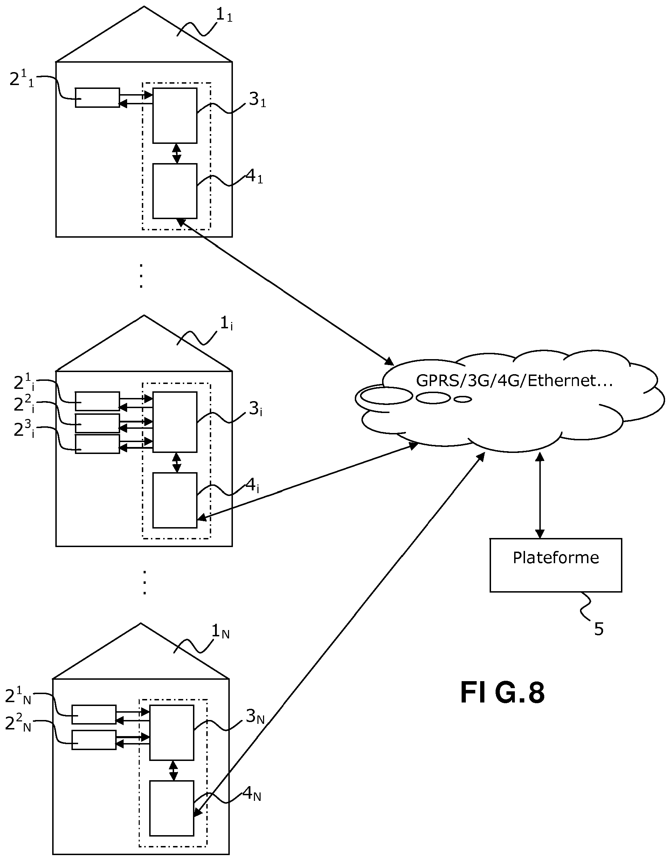

La figure 8 donne un exemple d'architecture d'un système de surveillance et/ou de gestion de consommation de charges électriques, susceptible d'implémenter un procédé de lissage conforme à l'invention, selon l'une des méthodes exposées ci-avant :

Sur cette figure, différents domiciles $1_1$, ...$1_i$, ...$1_N$ sont représentés, chacun étant équipé d'un ou plusieurs équipements électriques sous surveillance, par exemple des chauffages électriques, des climatiseurs ou autre, reliés à un réseau de distribution d'électricité (non représenté). Ainsi, le domicile $1_1$ comporte ici, à titre d'exemple non limitatif, un seul équipement électrique $2_1^1$, le domicile $1_i$ comporte trois équipements électriques $2_i^1$, $2_i^2$ et $2_i^3$, et le domicile $1_N$ comporte deux équipements électriques $2_N^1$ et $2_N^2$. Le système comporte en outre, au domicile de chaque consommateur :

- au moins un premier dispositif électronique $3_1$, ...$3_i$, ...$3_N$ relié électriquement aux différents équipements électriques sous surveillance dans le domicile, apte à mesurer, de préférence en continu, les tensions et les courants consommés par ces équipements électriques et à envoyer de façon sélective à chacun des équipements électriques sous surveillance du domicile des ordres de coupure de fonctionnement et des ordres de redémarrage de fonctionnement;

- au moins un deuxième dispositif électronique $4_1$, ...$4_i$, ...$4_N$ de communication relié au premier dispositif.

Le système comporte enfin au moins un serveur central 5 apte à communiquer avec le premier dispositif électronique par l'intermédiaire du deuxième dispositif électronique de communication pour obtenir en temps réel une pluralité d'échantillons de mesures de consommation à la période d'échantillonnage $T_{ech}$. L'obtention de la courbe de charge globale comprenant l'agrégation des courbes de charge élémentaires s'effectue au niveau de ce serveur central.

Le premier dispositif électronique, le deuxième dispositif électronique et le serveur central 5 correspondent par exemple respectivement au boîtier modulateur, au boîtier pilote et à la plateforme externe distante décrits dans le document WO2008/017754 au nom de la Demanderesse. Dans le cas présent, les mesures de consommation faites par chaque boîtier modulateur sont envoyées à la période d'échantillonnage $T_{ech}$ à la plateforme externe, via le boîtier pilote. Cet envoi périodique des mesures s'effectue par l'intermédiaire d'un modem de communication sans fil intégré dans le boîtier pilote du système, le modem de communication sans fil permettant une connexion à la plateforme externe de type téléphonie par paquet, tel que le GPRS, la 3G ou la 4G. Alternativement, la connexion au serveur central peut s'effectuer via une liaison de type ADSL. Le boîtier pilote est préférentiellement distinct du boîtier modulateur, comme montré sur la figure 8 et relié à ce dernier par une liaison filaire, de préférence par courant porteur de ligne ou CPL. Pour ce faire, chacun des boîtiers modulateur et pilote est équipé d'un modem CPL. Le boîtier pilote peut ainsi être relié à une pluralité de boîtiers modulateurs dont il collecte les mesures pour envoi à la plateforme externe. Le boîtier pilote comporte avantageusement un port USB qui permet d'accepter le branchement de modules complémentaires tels que des modems radio courte portée ou des capteurs de température. Ainsi, on peut prévoir également que la transmission des mesures depuis les boîtiers modulateurs s'effectue par cette voie radiofréquence.

En variante, le premier et le deuxième dispositifs électroniques peuvent être intégrés dans un unique boîtier.

Le procédé de lissage selon l'invention tel que présenté ci-avant dans ces différentes variantes peut être implémenté par le système de la figure 8 de plusieurs façons.

Selon une première implémentation possible, on peut prévoir que chaque deuxième dispositif électronique $4_1$, $4_i$,... $4_N$ soit apte à déterminer et mémoriser localement la courbe de charge élémentaire de chaque équipement électrique auquel il est relié, et à estimer sa période de régulation associée.

Chaque deuxième dispositif électronique $4_1$, ... $4_i$,... $4_N$ peut alors également être apte à décaler temporellement, soit une partie de courbe de charge élémentaire mémorisée soit, le fonctionnement de l'équipement électrique de son décalage aléatoire correspondant, selon les principes exposés ci-avant. Par exemple, chaque deuxième dispositif électronique $4_1$, ... $4_i$,...$4_N$ décalera temporellement le fonctionnement d'un équipement électrique de son décalage aléatoire correspondant par un envoi d'un ordre de coupure de fonctionnement puis d'un ordre de redémarrage de fonctionnement à appliquer successivement à cet équipement électrique.

Selon une deuxième implémentation, c'est au serveur central 5 qu'incombe la tâche de déterminer et mémoriser localement la courbe de charge élémentaire de chaque équipement électrique, et à estimer sa période de régulation associée. Le serveur central 5 peut alors décaler temporellement le fonctionnement d'un équipement électrique de son décalage aléatoire correspondant par un envoi d'un ordre de coupure de fonctionnement puis d'un ordre de redémarrage de fonctionnement à appliquer successivement à cet un équipement électrique par le premier dispositif électronique qui lui est relié. Dans ce cas, les envois d'ordres de coupure de fonctionnement et d'ordres de redémarrage de fonctionnement transitent et sont relayés au premier dispositif électronique par le deuxième dispositif électronique de communication.

Bien que l'invention a été décrite dans le cadre de la détermination d'une courbe de charge globale comprenant une agrégation de courbes de charge élémentaires correspondant à l'évolution temporelle de la consommation électrique d'une pluralité d'équipements électriques, la notion de consommation de charge correspond à tout phénomène physique pouvant être mesuré par une grandeur extensive et associable à un débit. L'invention est donc applicable à d'autres types d'énergies consommées, telles que du gaz, de l'eau, des électrons ou des photons, à partir du moment où les charges considérées fonctionnent en tout ou rien et que la consommation suit un schéma périodique, par exemple lorsque les charges considérées sont soumises à une régulation de type périodique.

## Revendications

1. Procédé de lissage d'une courbe de charge globale comprenant une agrégation d'une pluralité de courbes de charge élémentaires obtenues par un système de gestion et/ou de surveillance de consommation de charges, chaque courbe de charge élémentaire correspondant à une variation temporelle de la consommation d'une charge $i$ à régulation périodique, ledit procédé comportant les étapes suivantes :

- on détermine une période de régulation $d_i$ associée à la charge $i$ correspondante ;
- on détermine et on mémorise chaque courbe de charge élémentaire par obtention d'une pluralité d'échantillons de mesures de consommation à une période d'échantillonnage $T_{ech}$ sous-multiple de chaque période de régulation $d_i$ ;

- à partir d'un instant de référence $t_0$ commun à toutes les charges, on décale temporellement, soit le fonctionnement de chaque charge $i$, soit au moins une partie de chaque courbe de charge élémentaire mémorisée, d'un décalage aléatoire $\Delta t_i$ fonction de la période d'échantillonnage $T_{ech}$, de la période de régulation $d_i$ déterminée pour la charge $i$ et d'une valeur entière aléatoire $N_i$ associée à la charge $i$.

2. Procédé selon la revendication 1, **caractérisé en ce que** l'étape de décalage temporel du fonctionnement de chaque charge $i$ comporte, à partir dudit instant de référence $t_0$ commun à toutes les charges, l'application successive, pour chaque charge i, d'un ordre de coupure de fonctionnement de la charge $i$ puis d'un ordre de redémarrage de fonctionnement de la charge $i$.

3. Procédé selon la revendication 2, **caractérisé en ce que** ledit ordre de redémarrage de fonctionnement de la charge $i$ est appliqué à un instant aléatoire de redémarrage donné par la relation

$$t^{i}_{rep} = t^{0}_{rep_i} + \left(t^{0}_{rep_i} - t_0\right)N_i$$

dans laquelle $t^{0}_{rep_i}$ est un instant satisfaisant les deux relations suivantes : $\left(t^{0}_{rep_i} - t_0\right) < d_i$ et

$$\mathrm{PGCD}\left(\frac{\left(t^{0}_{rep_i} - t_0\right)}{T_{ech}} ; \frac{d_i}{T_{ech}}\right) = 1,$$

PGCD étant la fonction plus grand diviseur commun,
et **en ce que** ledit ordre de coupure de fonctionnement de la charge $i$ est appliqué à un instant de coupure supérieur ou égal à l'instant de référence $t_0$ commun à toutes les charges et inférieur à l'instant aléatoire $t^{i}_{rep}$ de redémarrage.

4. Procédé selon la revendication 3, **caractérisé en ce que** ledit ordre de coupure de fonctionnement de la charge $i$ est appliqué pour toutes les charges à l'instant de référence $t_0$.

5. Procédé selon la revendication 3, **caractérisé en ce que** ledit ordre de coupure de fonctionnement de la charge $i$ est appliqué à un instant choisi arbitrairement dans l'intervalle compris entre l'instant de référence $t_0$ commun à toutes les charges et l'instant aléatoire $t^{i}_{rep}$ de redémarrage.

6. Procédé selon la revendication 5, **caractérisé en ce que** ledit ordre de coupure de fonctionnement de la charge $i$ est appliqué à un instant choisi de manière à ce que le décalage aléatoire $\Delta t_i$ soit identique pour toute charge de même période de régulation $d_i$.

7. Procédé selon la revendication 6, **caractérisé en ce que** le décalage aléatoire $\Delta t_i$ est fixé égal à la période d'échantillonnage $T_{ech}$.

8. Procédé selon la revendication 1, **caractérisé en ce que** l'étape de décalage temporel d'une partie de chaque courbe de charge élémentaire mémorisée comprend la sélection de ladite partie de chaque courbe comprenant des échantillons de mesure obtenus à partir d'un premier instant identique pour toutes les charges, et le décalage de ladite partie sélectionnée pour faire coïncider son début avec un deuxième instant postérieur au premier instant.

**9.** Procédé selon la revendication 1, **caractérisé en ce que** l'étape de décalage temporel d'une partie de chaque courbe de charge élémentaire mémorisée comprend la détermination d'un premier instant simulant une coupure et d'un deuxième instant postérieur au premier instant et simulant un redémarrage, la sélection de ladite partie de chaque courbe comprenant des échantillons de mesure obtenus en aval d'un troisième instant correspondant à l'instant de référence augmenté d'une valeur correspondant à la période de régulation de la charge, le décalage de ladite partie sélectionnée pour faire coïncider son début avec ledit deuxième instant, et la suppression d'une portion de courbe située entre ledit premier instant et ledit deuxième instant.

**10.** Procédé selon l'une quelconque des revendications 8 ou 9, **caractérisé en ce que** ledit deuxième instant est un instant aléatoire donné par la relation

$$t_{rep}^{i} = t_{rep_i}^{0} + \left( t_{rep_i}^{0} - t_0 \right) N_i$$

dans laquelle $t_{rep_i}^{0}$ est un instant satisfaisant les deux relations suivantes :

$$\left( t_{rep}^{0} - t_0 \right) < d_i$$

$$PGCD\left( \frac{\left( t_{rep_i}^{0} - t_0 \right)}{T_{ech}} ; \frac{d_i}{T_{ech}} \right) = 1,$$

et PGCD étant la fonction plus grand diviseur commun,

et **en ce que** ledit premier instant est choisi supérieur ou égal à l'instant de référence $t_0$ commun à toutes les charges et inférieur au deuxième instant.

**11.** Procédé selon l'une quelconque des revendications précédentes, **caractérisé en ce que** la période de régulation $d_i$ associée à la charge i est déterminée en estimant ladite période de régulation $d_i$ à partir de la courbe de charge associée, ou en fixant ladite période de régulation à une valeur prédéterminée.

**12.** Procédé selon l'une quelconque des revendications précédentes, **caractérisé en ce que** la valeur entière aléatoire

$$\frac{d_i}{T_{ech}} - 1.$$

$N_i$ est n'importe quel entier supérieur ou égal à 0 et inférieur ou égal à

**13.** Système de gestion et/ou de surveillance de consommation de charges apte à déterminer une courbe de charge globale comprenant une agrégation d'une pluralité de courbes de charge élémentaires, chaque courbe de charge élémentaire correspondant à une variation temporelle de la consommation d'une charge *i* à régulation périodique, ledit système comportant des moyens aptes à effectuer un lissage de ladite courbe de charge par application des étapes suivantes :

- on détermine une période de régulation $d_i$ associée à la charge *i* correspondante ;
- on détermine et on mémorise chaque courbe de charge élémentaire par obtention d'une pluralité d'échantillons de mesures de consommation à une période d'échantillonnage $T_{ech}$ sous-multiple de chaque période de régulation $d_i$ ;
- à partir d'un instant de référence $t_0$ commun à toutes les charges, on décale temporellement, soit le fonctionnement de chaque charge *i*, soit au moins une partie de chaque courbe de charge élémentaire mémorisée, d'un décalage aléatoire $\Delta t_i$ fonction de la période d'échantillonnage $T_{ech}$, de la période de régulation $d_i$ déterminée

pour la charge *i* et d'une valeur entière aléatoire $N_i$ associée à la charge *i*.

14. Système selon la revendication 13, apte à la gestion et/ou de surveillance de consommation en énergie électrique de charges comprenant des équipements électriques domestiques situés chez une pluralité de consommateurs et raccordés à un réseau de distribution d'électricité.

15. Système selon la revendication 14, **caractérisé en ce que** le système comporte d'une part, chez chaque consommateur ($1_1, ...1_i,...1_N$), au moins un premier dispositif électronique ($3_1, ...3_i, ...3_N$) apte à mesurer la consommation électrique d'au moins un équipement électrique ($2_i^1$, $2_i^2$, $2_i^3$) auquel il est relié et à appliquer des ordres de coupure de fonctionnement et des ordres de redémarrage de fonctionnement audit au moins un équipement électrique ($2_i^1$, $2_i^2$), et au moins un deuxième dispositif électronique ($4_1, ...4_i,...4_N$) de communication relié au premier dispositif électronique et d'autre part, au moins serveur central (5) apte à communiquer avec ledit premier dispositif par l'intermédiaire du deuxième dispositif électronique ($4_1, ...4_i,...4_N$) de communication pour obtenir en temps réel ladite pluralité d'échantillons de mesures de consommation à la période d'échantillonnage $T_{ech}$.

16. Système selon la revendication 15, **caractérisé en ce que** le premier et le deuxième dispositifs électroniques sont intégrés dans un unique boîtier.

**Patentansprüche**

1. Verfahren zur Glättung einer globalen Lastkurve, umfassend eine Aggregation einer Vielzahl elementarer Lastkurven, erhalten durch ein Lastverbrauch-Verwaltungs- und/oder Überwachungssystem, wobei jede elementare Lastkurve einer zeitlichen Schwankung des Verbrauchs einer Last i mit periodischer Regulierung entspricht, wobei das Verfahren die folgenden Schritte aufweist:

   - Bestimmen einer Regulierungsperiode $d_i$, die der entsprechenden Last *i* zugeordnet ist;
   - Bestimmen und Speichern jeder elementaren Lastkurve durch Erhalt einer Vielzahl von Verbrauchsmessproben in einer Probenahmeperiode $T_{ech}$ als Untereinheit jeder Regulierungsperiode $d_i$;
   - ab einem Referenzzeitpunkt $t_0$, der alle Lasten gemeinsam ist, zeitliches Versetzen entweder der Funktion jeder Last *i* oder mindestens eines Teils jeder gespeicherten elementaren Lastkurve um einen Zufallsversatz $\Delta t_i$ als Funktion der Probenahmeperiode $T_{ech}$, der für die Last i bestimmten Regulierungsperiode $d_i$ und eines ganzzahligen, der Last i zugeordneten Zufallswerts $N_i$.

2. Verfahren nach Anspruch 1, **dadurch gekennzeichnet, dass** der Schritt der des zeitlichen Versetzens der Funktion jeder Last *i* ab dem Referenzzeitpunkt $t_0$, der allen Lasten gemeinsam ist, die aufeinanderfolgende Anwendung, für jede Last *i*, eines Abschaltbefehls der Funktion der Last *i*, dann eines Neustartbefehls der Funktion der Last *i* aufweist.

3. Verfahren nach Anspruch 2, **dadurch gekennzeichnet, dass** der Neustartbefehl der Funktion der Last *i* zu einem zufälligen Neustartzeitpunkt angewendet wird, bestimmt durch die Gleichung

$$t_{rep}^i = t_{rep_i}^0 + \left( t_{rep_i}^0 - t_0 \right) N_i$$

wobei $t_{rep_i}^0$ ein Zeitpunkt ist, der die zwei folgenden Gleichungen erfüllt: $\left( t_{rep_i}^0 - t_0 \right) < d_i$ und

$$\text{PGCD}\left(\frac{\left(t^{0}_{rep_{i}} - t_{0}\right)}{T_{ech}}; \frac{d_{i}}{T_{ech}}\right) = 1,$$

, wobei PGCD die Funktion größter gemeinsamer Teiler ist, und dass der Abschaltbefehl der Funktion der Last *i* zu einem Abschaltzeitpunkt angewendet wird, der größer oder gleich dem Referenzzeitpunkt $t_0$, der allen Lasten gemeinsam ist, und kleiner als der zufällige Neustartzeitpunkt $t^{i}_{rep}$ ist.

4. Verfahren nach Anspruch 3, **dadurch gekennzeichnet, dass** der Abschaltbefehl der Funktion der Last *i* auf alle Lasten zum Referenzzeitpunkt $t_0$ angewendet wird.

5. Verfahren nach Anspruch 3, **dadurch gekennzeichnet, dass** der Abschaltbefehl der Funktion der Last *i* zu einem Zeitpunkt angewendet wird, der zufällig in dem Intervall ausgewählt wird, der zwischen dem Referenzzeitpunkt $t_0$, der allen Lasten gemeinsam ist, und dem zufälligen Neustartzeitpunkt $t^{i}_{rep}$ liegt.

6. Verfahren nach Anspruch 5, **dadurch gekennzeichnet, dass** der Abschaltbefehl der Funktion der Last *i* zu einem Zeitpunkt angewendet wird, der derart ausgewählt ist, dass der Zufallsversatz $\Delta t_i$ für jede Last derselben Regulierungsperiode $d_i$ identisch ist.

7. Verfahren nach Anspruch 6, **dadurch gekennzeichnet, dass** der Zufallsversatz $\Delta t_i$ gleich der Probenahmeperiode $T_{ech}$ festgelegt ist.

8. Verfahren nach Anspruch 1, **dadurch gekennzeichnet, dass** der Schritt des zeitlichen Versetzens eines Teils jeder gespeicherten elementaren Lastkurve das Auswählen des Teils jeder Kurve, der Messproben umfasst, die auf der Basis eines ersten Zeitpunkts erhalten wurden, der für alle Lasten identisch ist, und das Versetzen des ausgewählten Teils umfasst, um seinen Anfang mit einem zweiten Zeitpunkt nach dem ersten Zeitpunkt in Übereinstimmung zu bringen.

9. Verfahren nach Anspruch 1, **dadurch gekennzeichnet, dass** der Schritt des zeitlichen Versetzens eines Teils jeder gespeicherten elementaren Lastkurve das Bestimmen eines ersten Zeitpunkts umfasst, der ein Abschalten simuliert, und eines zweiten Zeitpunkts nach dem ersten Zeitpunkt, der einen Neustart simuliert, wobei die Auswahl des Teils jeder Kurve Messproben umfasst, die nach einem dritten Zeitpunkt erhalten werden, der dem Referenzzeitpunkt entspricht, verlängert um einen Wert, der der Regulierungsperiode der Last, dem Versatz des Teils, der ausgewählt ist, um seinen Anfang mit dem zweiten Zeitpunkt in Übereinstimmung zu bringen, und der Unterdrückung eines Abschnitts der Kurve entspricht, der sich zwischen dem ersten Zeitpunkt und dem zweiten Zeitpunkt befindet.

10. Verfahren nach einem der Ansprüche 8 oder 9, **dadurch gekennzeichnet, dass** der zweite Zeitpunkt ein zufälliger Zeitpunkt ist, bestimmt durch die Gleichung

$$t^{i}_{rep} = t^{0}_{rep_{i}} + \left(t^{0}_{rep_{i}} - t_{0}\right)N_{i}$$

wobei $t^{0}_{rep_{i}}$ ein Zeitpunkt ist, der die zwei folgenden Gleichungen erfüllt:

$$\left(t^{0}_{rep} - t_{0}\right) < d_{i}$$

$$PGCD\left(\frac{(t^0_{rep_i} - t_0)}{T_{ech}}; \frac{d_i}{T_{ech}}\right) = 1,$$

und ' wobei PGCD die Funktion größter gemeinsamer Teiler ist, und dass der erste Zeitpunkt größer oder gleich dem Referenzzeitpunkt $t_0$, der allen Lasten gemeinsam ist, und kleiner als der zweite Zeitpunkt gewählt ist.

11. Verfahren nach einem der vorangehenden Ansprüche, **dadurch gekennzeichnet, dass** die der Last *i* zugeordnete Regulierungsperiode $d_i$ durch Schätzen der Regulierungsperiode $d_i$ auf der Basis der zugeordneten Lastkurve oder durch Festlegen der Regulierungsperiode auf einen vorher festgelegten Wert bestimmt wird.

12. Verfahren nach einem der vorangehenden Ansprüche, **dadurch gekennzeichnet, dass** der ganzzahlige Zufallswert

$$\frac{d_i}{T_{ech}} - 1$$

$N_i$ jede Ganzzahl größer oder gleich 0 und kleiner oder gleich ist.

13. Lastverbrauch-Verwaltungs- und/oder Überwachungssystem, das imstande ist, eine globale Lastkurve zu bestimmen, die eine Aggregation einer Vielzahl elementarer Lastkurven umfasst, wobei jede elementare Lastkurve einer zeitlichen Schwankung des Verbrauchs einer Last *i* mit periodischer Regulierung entspricht, wobei das System Mittel aufweist, die imstande sind, eine Glättung der Lastkurve durch Anwendung der folgenden Schritte durchzuführen:

- Bestimmen einer Regulierungsperiode $d_i$, die der entsprechenden Last *i* zugeordnet ist;
- Bestimmen und Speichern jeder elementaren Lastkurve durch Erhalt einer Vielzahl von Verbrauchsmessproben in einer Probenahmeperiode $T_{ech}$ als Untereinheit jeder Regulierungsperiode $d_i$;
- ab einem Referenzzeitpunkt $t_0$, der alle Lasten gemeinsam ist, zeitliche Versetzung entweder der Funktion jeder Last *i* oder mindestens eines Teils jeder gespeicherten elementaren Lastkurve um einen Zufallsversatz $\Delta t_i$ als Funktion der Probenahmeperiode $T_{ech}$, der für die Last *i* bestimmten Regulierungsperiode $d_i$ und eines ganzzahligen, der Last i zugeordneten Zufallswerts $N_i$.

14. System nach Anspruch 13, das zur Verwaltung und/oder Überwachung des Stromverbrauchs von Lasten imstande ist, umfassend elektrische Haushaltsausrüstungen, die sich bei einer Vielzahl von Verbrauchern befinden und an ein Stromverteilernetz angeschlossen sind.

15. System nach Anspruch 14, **dadurch gekennzeichnet, dass** das System zum einen bei jedem Verbraucher ($1_1$, ... $1_i$, ... $1_N$) mindestens eine erste elektronische Vorrichtung ($3_1$, ... $3_i$, ... $3_N$) aufweist, die imstande ist, den Stromverbrauch mindestens einer elektrischen Ausrüstung ($2_i^1$, $2_i^2$, $2_i^3$) zu messen, mit der sie verbunden ist, und auf die mindestens eine elektrische Ausrüstung ($2_i^1$, $2_i^2$) Abschaltbefehle der Funktion und Neustartbefehle der Funktion anzuwenden, und mindestens eine zweite elektronische Kommunikationsvorrichtung ($4_1$, ... $4_i$, ... $4_N$), die mit der ersten elektronischen Vorrichtung verbunden ist und zum anderen mindestens einen Zentralserver (5), der imstande ist, mit der ersten Vorrichtung über die zweite elektronische Kommunikationsvorrichtung ($4_1$, ... $4_i$, ... $4_N$) zu kommunizieren, um in Echtzeit die Vielzahl von Verbrauchsmessproben in der Probenahmeperiode $T_{ech}$ zu erhalten.

16. System nach Anspruch 15, **dadurch gekennzeichnet, dass** die erste und die zweite elektronische Vorrichtung in einem einzigen Gehäuse integriert sind.

## Claims

1. A method for smoothing an overall load curve comprising an aggregation of a plurality of elementary load curves obtained by a system for managing and/or monitoring load consumption, each elementary load curve corresponding to a temporal variation of the consumption of a load *i* with periodic regulation, said method including the following steps:

- determining a regulation period $d_i$ associated with the corresponding load *i*;

- determining and storing each elementary load curve by obtaining a plurality of consumption measurement samples with a sampling period $T_{ech}$ which is a sub-multiple of each regulation period $d_i$;
- from a reference instant $t_0$ which is common to all of the loads, time-shifting either the operation of each load $i$, or at least part of each stored elementary load curve, by a random shift $\Delta t_i$ which depends on the sampling period $T_{ech}$, on the regulation period $d_i$ determined for the load $i$ and on a random integer value $N_i$ associated with the load $i$.

2. The method according to claim 1, **characterized in that** the step for time-shifting the operation of each load $i$ includes, from said reference instant to which is common to all of the loads, successively applying, for each load i, an order to stop operation of the load $i$, then an order to restart operation of the load $i$.

3. The method according to claim 2, **characterized in that** said order to restart operation of the load $i$ is applied at a random restart instant given by the relationship

$$t^i_{rep} = t^0_{rep_i} + \left( t^0_{rep_i} - t_0 \right) N_i$$

wherein $t^0_{rep_i}$ is an instant satisfying both of the following relationships: $\left( t^0_{rep_i} - t_0 \right) < d_i$ and

$$PGCD\left( \frac{\left( t^0_{rep_i} - t_0 \right)}{T_{ech}} ; \frac{d_i}{T_{ech}} \right) = 1,$$

PGCD being the greatest common divisor function, and **in that** said order to stop operation of the load $i$ is applied at a stop instant greater than or equal to the reference instant to which is common to all of the loads and less than the random restart instant $t^i_{rep}$.

4. The method according to claim 3, **characterized in that** said order to stop operation of the load $i$ is applied for all of the loads at the reference instant $t_0$.

5. The method according to claim 3, **characterized in that** said order to stop operation of the load $i$ is applied at an instant chosen arbitrarily in the interval comprised between the reference instant $t_0$ common to all of the loads and the random restart instant $t^i_{rep}$.

6. The method according to claim 5, **characterized in that** said order to stop operation of the load $i$ is applied at an instant chosen in such a way that the random shift $\Delta t_i$ is identical for any load having the same regulation period $d_i$.

7. The method according to claim 6, **characterized in that** the random shift $\Delta t_i$ is set to be equal to the sampling period $T_{ech}$.

8. The method according to claim 1, **characterized in that** the step for time-shifting part of each stored elementary load curve comprises selecting said part of each curve comprising measuring samples obtained from a first instant which is identical for all of the loads, and shifting said selected part in order to make its beginning coincide with a second instant later than the first instant.

9. The method according to claim 1, **characterized in that** the step for time-shifting part of the stored elementary load curve comprises determining a first instant simulating a stop and a second instant later than the first instant and simulating a restart, the selection of said part of each curve comprising measured samples obtained downstream of a third instant corresponding to the reference instant increased by a value corresponding to the regulation period of the load, shifting said selected part in order to make its beginning coincide with said second instant, and eliminating a curve portion situated between said first instant and said second instant.

10. The method according to any one of claims 8 or 9, **characterized in that** said second instant is a random instant given by the relationship

$$t^i_{rep} = t^0_{rep_i} + \left( t^0_{rep_i} - t_0 \right) N_i$$

wherein $t^0_{rep_i}$ is an instant satisfying the following two relationships:

$$\left( t^0_{rep} - t_0 \right) < d_i$$

$$PGCD \left( \frac{\left( t^0_{rep_i} - t_0 \right)}{T_{ech}} ; \frac{d_i}{T_{ech}} \right) = 1,$$

and PGCD being the greatest common divisor function, and **in that** said first instant is chosen to be greater than or equal to the reference instant to which is common to all of the loads and less than the second instant.

11. The method according to any one of the preceding claims, **characterized in that** the regulation period $d_i$ associated with the load $i$ is determined by estimating said regulation period $d_i$ from the associated load curve, or by setting said regulation period to a predetermined value.

12. The method according to any one of the preceding claims, **characterized in that** the random integer value $N_i$ is any integer greater than or equal to 0 and less than or equal to $\frac{d_i}{T_{ech}} - 1$.

13. A system for managing and/or monitoring load consumption which is able to determine an overall load curve comprising an aggregation of a plurality of elementary load curves, each elementary load curve corresponding to a temporal variation of the consumption of the load $i$ with periodic regulation, said system including means able to smooth said load curve by applying the following steps:

   - determining a regulation period $d_i$ associated with the corresponding load $i$;
   - determining and storing each elementary load curve by obtaining a plurality of measured consumption samples with a sampling period $T_{ech}$ which is a sub-multiple of each regulation period $d_i$;
   - from a reference instant $t_0$ which is common to all of the loads, time-shifting either the operation of each load $i$, or at least part of each stored elementary load curve, by a random shift $\Delta t_i$ depending on the sampling period $T_{ech}$, on the regulation period $d_i$ determined for the load $i$ and on a random integer value $N_i$ associated with the load $i$.

14. The system according to claim 13, which is able to manage and/or monitor electrical energy consumption of loads, comprising household electrical appliances located in the homes of a plurality of consumers and connected to an electrical distribution grid.

15. The system according to claim 14, **characterized in that** the system includes, on the one hand, in the home of each consumer ($1_1, ... 1_i,... 1_N$), at least a first electronic device ($3_1, ...3_i,...3_N$) which is able to measure the electrical consumption of at least one electrical appliance ( $2^1_i$, $2^2_i$, $2^3_i$ ) to which it is connected and to apply orders to stop operation and orders to restart operation to said at least one electrical appliance ( $2^1_i$, $2^2_i$ ), and at least one second electronic communication device ($4_1$, ...$4_i$,...$4_N$) connected to the first electronic device, and on the other hand, at least central server (5) able to communicate with said first device by means of the second electronic communication device ($4_1$, ...$4_i$,...$4_N$) in order to obtain, in real time, said plurality of measured consumption samples with the sampling period $T_{ech}$.

16. The system according to claim 15, **characterized in that** the first and the second electronic devices are integrated into a single housing.

$P_{TOT}$ (MW)

$C_{TOT}$

0

10 mn

$T_{ech}$ =10 s

T(h)

## FIG.1

$P_{1cons}$

$C_1$

0

$d_1$=20 s

$P_{2cons}$

$C_2$

0

$d_2$=40 s

$P_{3cons}$

$C_3$

0

## FIG.2

$d_3$=80 s

**FI G.3**

**FI G.4**

| Détermination période de régulation $d_i$ | $S_1$ |

| Obtention échantillons de mesures de consommation charge i<br>Période échantillonnage = $T_{ech}$ | $S_2$ |

| Coupure charge i à $t^i_{coup}$ et redémarrage charge i à $t^i_{rep}$<br><br>$\Delta t_i = F(T_{ech}, d_i, N_i)$ | $S_3$ |

**FI G.5**

**FI G.6**

**FI G.7**

FI G.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008017754 A

- WO 2012172242 A